# NEW EUROPEAN PATENT SPECIFICATION

(11) **EP 2 635 812 B2**
(45) Date of publication and mention of the opposition decision: **20.12.2023**
(45) Mention of the grant of the patent: 12.08.2015
(21) Application number: 12705171.2
(22) Date of filing: 31.01.2012
(51) Int. Cl.: F04B 7/00, F04B 49/22, F04B 49/24, F04B 53/10, F04B 49/06, F04B 17/02

(54) **METHOD OF CONTROLLING A HYDRAULIC MACHINE TO REDUCE TORQUE RIPPLE AND/OR BEARING SIDE LOAD**
VERFAHREN ZUR STEUERUNG EINER HYDRAULISCHEN MASCHINE ZUR VERRINGERUNG VON DREHMOMENTWELLIGKEIT UND/ODER VON SEITENLASTEN AN LAGERSTELLEN
PROCÉDÉ DE CONTRÔLE D'UNE MACHINE HYDRAULIQUE POUR RÉDUIRE L'ONDULATION DE COUPLE ET/OU DE CHARGES TRANSVERSALES SUR DES ROULEMENTS

(43) Date of publication of application: 11.09.2013
(73) Proprietor: MITSUBISHI HEAVY INDUSTRIES, LTD., Tokyo 108-8215 (JP)
(72) Inventor: CALDWELL, Niall, Lothian EH209TB (GB); DUMNOV, Daniil, Lothian EH209TB (GB); LAIRD, Stephen, Lothian EH209TB (GB)
(74) Representative: Hindles Limited
(86) International application number: PCT/JP2012/000628
(87) International publication number: WO 2013/114436

(56) References cited:
- EP-B1- 1 537 333
- WO-A1-03/098037
- WO-A1-2008/009950
- WO-A1-2008/025413
- DE-A1-102010 031 818

## Description

### Technical Field

The invention relates to the field of large hydraulic machines suitable for use in applications such as a hydraulic transmission in a wind turbine generator, in which the volume of working fluid displaced by each cylinder on each cycle of cylinder volume is selectable by the control of electronically controlled valves.

### Background Art

It is known from EP 0 361 927 (Salter and Rampen) to operate a hydraulic pump in which each cylinder has an electronically controlled low pressure valve arranged to regulate the flow of working fluid from low pressure manifold into the respective cylinder and to control the electronically controlled valve on each cycle of cylinder volume to determine whether the cylinder undergoes a pumping cycle with a net displacement of working fluid, or an idle cycle with no net displacement of working fluid. EP 0 494 236 (Salter and Rampen) discloses an improvement in which the valve between each cylinder and the high pressure manifold (the high pressure valves) are also electronically controlled on each cycle of cylinder volume to enable each cylinder to undergo a motoring cycle with a net displacement of working fluid. EP 1 537 333 (Stein et al.) introduced the possibility of part strokes enabling each cylinder to displace either part or all of its maximum stroke volume, in either pumping or motoring mode, on each cycle of working chamber volume. Typically, when partial displacement cycles are employed, they are mixed in with full displacement cycles as this is most efficient. Examples of machines of this type are Digital Displacement brand hydraulic pumps and motors (Digital Displacement is a trade mark of Artemis Intelligent Power Limited of Loanhead, UK).

Hydraulic machines of this type have the advantage that as the displacement during each cycle of cylinder volume can be selected, they can provide an infinitely variable range of output or input displacement, averaged over a sufficiently long period of time. They can also respond quickly to changes in displacement demand as in a typical application there will be only a very short delay before the next decision point as to the displacement which an individual cylinder should make. Thus, a typical control algorithm selects the volume to be displaced by each cylinder so that the total displacement best matches a demand signal (which might be a desired displacement, or a related variable linked to displacement, such as high pressure manifold pressure). Therefore, a decision is made independently for each volume cycle of each cylinder as to whether or not to carry out an active cycle (in which there is a net displacement of working fluid, whether a full stroke cycle in which the maximum amount of working fluid is displaced or a partial stroke cycle in which only a part of this amount is displaced) or an inactive cycle (in which there is no net displacement of working fluid, perhaps because the low pressure valve is held open so that received working fluid is output back to the low pressure manifold or because all of the valves are held closed so that there is no net displacement of working fluid, simply cavitation in the small residual volume of working fluid within the cylinder). Accordingly, there is no correlation between the cylinders that are selected. Each cylinder is equally likely to be selected, depending on the displacement signal and net output.

This arrangement has several advantages. Each cylinder and its associated valves typically suffers equal wear; and the advantages of infinitely variable range of displacement and rapid response to changes in demand are maximised.

The invention seeks to improve the long term reliability of machines of this type, particularly large machines, for use in applications such as renewable energy generation, particularly in located where maintenance can be difficult, such as in the nacelle of an offshore wind turbine. In such applications, reliability, lifetime and time between maintenance visits are important.

In order to maximise reliability, it is advantageous to minimise torque ripple and bearing side load. By torque ripple we refer to the variations in torque which arise from the quantised output displacement of machines of this type. The torque in question may be the torque acting on the crankshaft of the hydraulic machine or on another machine which is couple to the hydraulic machine, for example, the torque acting on the blades of a wind turbine coupled to a hydraulic pump through a drive shaft, or the rotating shaft of an electric generator coupled to a hydraulic motor. By bearing side load we refer to the net radial forces acting on the crankshaft of a hydraulic machine, and therefore the bearings which retain that crankshaft, due to unequal radial forces being applied to a cam coupled to the crankshaft by the action of pistons on the cam. The force each piston exerts on the cam varies depending on the displacement selected for the respective cylinder during each cycle of cylinder volume. In the case of a hydraulic machine controlled according to the algorithm as specified above, both torque ripple and bearing side load can be significant due to the continued random variation in which cylinders are selected. Bearing side load can be particularly high at some displacement levels which lead to forces being exerted predominantly by pistons driven by cylinders located adjacent each other and therefore exerting forces which sum to a high resultant force.

The invention seeks to solve the technical problem of reducing torque ripple and/or bearing side load in hydraulic machines of the type described above. In the case of bearing side load, some aspects of the invention aim to reduce bearing side load, but not to zero as it can be advantageous to have some small bearing side load to keep the bearing from skidding.

EP 2 055 943 (Kin-ho and Kuttler) discloses a method of operating a hydraulic machine of this type in which pre-calculated patterns of actuation pulses are used to actuate electronically controlled valves, wherein the pre-calculated patterns can be selected to reduce torque ripple. However, there can be difficulties with torque ripple changing when one pattern is completed and the next begins and this does not address bearing side load, particularly as the pre-calculated patterns are preferably relatively short. Decisions are frequently made as to which pre-calculated pattern to employ and there is no correlation between which cylinders are employed.

US 4,724,742 (Poclain) discloses a hydraulic machine in which the cylinders are organised into at least two groups, which can be selected to reduce bearing side load, and all or none of the cylinders in each groups can be supplied with hydraulic fluid by the operation of a valve. This technology requires a period of multiple cycles of cylinder volume to switch groups of cylinders on and off and so responds slowly compared to machines of the type described above, entirely lacking the advantages of infinitely variable displacement and rapid response to displacement demands. There is no reason to consider such a type of machine once the improved machines of the type described above are known. Furthermore, the grouping of cylinders is fixed, and cannot be changed. WO 2008/025413 discloses a control device for a hydraulic piston machine comprising a plurality of pistons, each delimiting a working chamber the volume of which varies with the stroke of a piston and which can be connected to a first port via a first valve and to a second port via a second valve. At least one of the two valves of a working chamber can be actively electrically actuated. The control device comprises an electronic control unit which operates the actively actuated valves of the working chambers in an idle stroke mode, in which the piston stroke is not utilized, a partial stroke mode, in which only a part of the piston stroke is utilized, and a complete stroke mode in which the complete piston stroke is utilized. For an operation with only few pulsations, all pistons are operated in a partial stroke mode in a first volume flow range and a reduced number of pistons are operated in the partial stroke mode and the other pistons in the idle stroke mode in a subsequent, second volume flow range. WO 2008/025413 does not disclose any correlation between the cylinders that are selected.

By cylinder volume we refer to the instantaneous volume of the working chamber defined between a cylinder and its respective piston.

There is provided a hydraulic machine comprising a controller, a plurality of cylinders, a low pressure working fluid line, a high pressure working fluid line, and a plurality of valves regulating the flow of working fluid between each cylinder and the low and high pressure working fluid lines, at least one valve associated with each cylinder being an electronically controlled valve, the controller being operable to actively control the opening and/or closing of the electronically controlled valves to select whether a cylinder undergoes an active cycle during which there is a net displacement of working fluid or an inactive cycle during which there is no net displacement of working fluid, for each cylinder on each cycle of cylinder volume,
wherein the controller is configured (typically programmed) to cause selected cylinders to undergo active cycles and the remainder of said plurality of cylinders to undergo inactive cycles, wherein the selected cylinders form one or more groups of cylinders, so that there is a correlation between cylinders in each group undergoing active cycles,
wherein the hydraulic machine further comprises a database for storing cylinder group data which defines a plurality of cylinder groups each including correlated cylinders, and wherein the controller is configured to select one or more groups of cylinders to undergo the active cycles from the plurality of cylinder groups defined by the stored cylinder group data.

### Summary of Invention

According to the invention there is provided a hydraulic machine according to claims 1 to 7.

The selected cylinders will undergo active cycles during each volume cycle and the remaining cylinders will undergo inactive cycles during each volume cycle until the selection is changed. As the selected cylinders form one or more groups, the selection of cylinders will be correlated so that if a first cylinder typically undergoes an active cycle, a second cylinder in the same group will typically undergo an active cycle. Thus, in contrast to known arrangements in which there is no correlation between the selection of cylinders to undergo active cycles, the groups can be defined so as to improve the lifetime of the machine, for example, to reduce torque ripple or bearing side load. As a result, the controller operates the cylinders so that one of a plurality of discrete fractions of the available cylinders undergo active cycles, which plurality of discrete fractions of the available cylinders are fewer in number than the number of possible discrete fractions of the available cylinders if a decision was made independently for each cylinder as to whether the respective cylinder should undergo an active cycle or an inactive cycle. The number of discrete fractions of the available cylinders is preferably less than the number of cylinders in the plurality of cylinders.

Said plurality of cylinders may be all of the cylinders of a hydraulic machine, or all of the cylinders around an eccentric, however, it is possible for the hydraulic machine to comprise one or more further cylinders which are selected in a different way.

Preferably, the hydraulic machine comprises a rotating shaft and a shaft position sensor to determine the position of the rotating shaft and the controller is configured to operate the electronically controlled valves in phased relationship to cycles of cylinder volume, taking into account the shaft position measured by the shaft position sensor.

By a correlation we refer to a correlation which is substantially independent of displacement and is therefore not the apparent correlation which might arise temporarily in prior art machines if displacement demand was held at a fraction of maximum output which caused certain cylinders to be selected on each cycle of cylinder volume until the displacement demand signal changed (for example, in a machine with 12 cylinders which are equally spaced in phase angle, at a demand of precisely 25% of maximum demand the same 3 cylinders would be selected on each cycle until there was a small change in the demand signal). Thus, the selected cylinders will typically undergo active cycles repetitively while the remainder of said plurality of cylinders undergo inactive cycles repetitively until the selection of cylinders is changed.

By a group of cylinders we refer to a minimum of two cylinders. Typically the groups of cylinders are group of at least three cylinders. Typically the cylinders have the same volume. Typically, apart from phase offsets, the profile of cylinder volume with shaft phase angle is the same for each cylinder.

Preferably, the cylinders in each group are selected to limit (preferably minimise) either one or both of torque ripple and bearing side load.

Torque ripple is strongly affected by variations in the rate of displacement of working fluid by the cylinders to the high pressure working fluid line (in the case of a pump or a pump-motor operating as a pump) or from the high pressure working fluid line (in the case of a motor or a pump-motor operating as a motor). By causing only one or more groups of cylinders to undergo active cycles, each group having been selected to limit torque ripple, overall torque ripple is limited. The torque ripple generated by groups of cylinders depends on the phase difference between the cylinders in the group and their variation in displaced fluid with phase angle during each cycle of cylinder volume. The selected cylinders undergo active cycles and the remaining cylinders undergo idle cycles until the selection of groups of cylinders is changed. Typically, changes in the selection of groups of cylinders are minimised, thereby minimising the torque ripple which may occur temporarily due to changes in the selection of groups.

Bearing side load arises from unequal forces acting on the cam, leading to net radial forces. Bearing side load can be limited by, for example, including cylinders which are both in phase and on opposite sides of a cam from each other in the same group, so that the forces which they exert on the cam and thereby on the bearings are cancelled out. This reduces undesirable forces acting on the crankshaft and bearings.

Nevertheless, in some embodiments, bearing side load is deliberately not reduced to zero but some small bearing side load is maintained. This can be helpful in that with no bearing side load there is a risk of the bearings skidding. For example, it may be that some groups of cylinders are selected to have no bearing side load but at least one group of cylinders is employed at any given time which does generate some bearing side load. The bearing side load will process with rotation of the shaft. Thus, it may be that bearing side load is maintained below a threshold rather than as close to zero as possible.

Typically, the cylinders in the group are selected to reduce the variation between maximum and minimum torque during repeating cycles of cylinder volume to within 10%, or preferably, within 5% of the maximum torque.

The hydraulic machine may be configured so that the cylinders in each group are operated with phase angles spaced apart by 360°/n where n is an integer greater than 2 to thereby limit torque ripple.

This phase difference minimises torque ripple for most cam working surface profiles. The phase difference between any two cylinder is determined by the angular displacement of the two cylinders around the cam and by the profile of the working surface of the cam. The cam may be a ring cam. The cylinders may be located around the outside of the ring cam. The cylinder may be located around the inside of the ring cam. The cam may be a multi-lobe cam.

It may be that in at least some circumstances, one or more groups of cylinders are selected such that for each cylinder in the selected one or more groups, there is another cylinder which is operated in phase with said cylinder located on the opposite side of the cam, or an integer number, m, of other cylinders operated in phase with said cylinder mutually spaced around the cam by an angle of 360° / m, to limit bearing side load. Preferably, although bearing side load is limited, it is not reduced to zero but instead maintained below a threshold as it can be advantageous to have some small bearing side load to avoid the bearing slipping.

Therefore, the forces exerted on the cam by working fluid within the cylinders (typically through pistons and piston shoes or rollers) are balanced, with substantially the same radially inwards force being exerted in opposite senses by cylinders on opposite sides of the cam (or m cylinders mutually spaced by 360° / m having a net resultant force of substantially zero). This minimises bearing side load. It may be that the one or more groups of cylinders are selected in this way when the hydraulic machine is operating at specific fractions of maximum displacement. By a fraction of maximum displacement we refer to a proportion of the displacement which would occur if each cylinder displaced the maximum amount of working fluid which it can displace on each cycle of cylinder volume at a given shaft rotation speed.

It may be that, during normal operation, the selection of cylinders is changed less frequently than would be required to best match actual displacement to a displacement demand signal by selecting one or more groups of cylinders, from amongst a plurality of groups of cylinders, with a frequency equal to the frequency of cycles of cylinder volume.

It may be that, during normal operation, the selection of cylinders is usually (e.g. at least 90% of the time, or at least 95% or 98% of the time) changed less frequently than the frequency of cycles of cylinder volume.

These approaches contrast with the normal operating mode of hydraulic machines in which the displacement of working fluid by each cylinder is selectable on each cycle of cylinder volume by controlling electronically controlled valves, meaning that if there are cylinders which are phased n degrees apart, a decision as to whether to select an individual cylinder is made with a frequency = 360 / n * the frequency of cycles of cylinder volume. In combination with the operation of selected cylinders to undergo active cycles during each cycle of cylinder volume while the remaining cylinders in said plurality of cylinders undergo inactive cycles during each cycle of cylinder volume, this reduced cylinder selection frequency reduces torque ripple and/or bearing side load. This is because changing the selection of cylinders, from one or more groups which are selected to reduce torque ripple and/or bearing side load to a different one or more groups which are selected to reduce torque ripple and/or bearing side load typically introduces transients of torque ripple and/or bearing side load.

It may be that, during normal operation, the controller is configured to select one or more groups of cylinders from the plurality of cylinders so that one of a set of discrete possible fractions of the available cylinders are used and to change the selection of cylinders less frequently than would be required to best match a displacement demand signal by selecting a different one of the set of discrete possible displacements for a cycle of cylinder volume with a frequency equal to the frequency of cycles of cylinder volume, or less frequently that half of said frequency, or less frequently than one quarter of said frequency.

These approaches are especially useful in the case of hydraulic pump coupled to a renewable energy turbine, for example, a wind turbine, particularly a turbine having a mass in excess of 1 ton, as the inertia of the turbine is relatively high, and delays in changing the displacement of the pump (for example, due to a change in the speed of rotation of the turbine caused by fluctuating wind speeds) are not of especial concern.

The hydraulic machine may change the selection of cylinders more frequently in one or more alternative operating modes, for example, on shut down or start up, or in response to a transient event or a fault.

Typically, said plurality of cylinders share a common working fluid output (in the case of a pump or a pump-motor in pumping mode) or a common working fluid input (in the case of a motor or a pump-motor in motoring mode) and are individually connectable to the common working fluid output or common working fluid input on each cycle of cylinder volume by virtue of control of the electronically controlled valves by the controller.

There may be additional cylinders which have alternative working fluid outputs or inputs respectively. Preferably, the cylinders which have correlated active cycles are selected by the controller by executing a computer program (rather than being defined in hardware).

It may be that the controller selects whether individual cylinders undergo active cycles or inactive cycles taking into account cylinder grouping data which defines the plurality of groups of cylinders.

Cylinder group data is stored in a computer readable medium, such as RAM. Cylinder group data may be determined before operation of the hydraulic machine begins. Cylinder group data may be generated during operation of the hydraulic machine.

The controller may be programmed to change the cylinder grouping data to change the cylinders which make up at least one of the groups during operation, or to change the circumstances (e.g. displacement) under which at least one of the groups is selected, under some circumstances.

A cylinder may at one time belong to a first group and then later belong to a second group. It may be that the controller is programmed to change the cylinders which make up at least one of the groups during operation, or to change the circumstances under which at least one of the groups is selected, in response to determining that there is a fault in one or the cylinders, or to even out usage of the cylinders to reduce wear.

An active cycle may be a full stroke cycle in which a cylinder displaces a maximum stroke volume of working fluid. An active cycle may be a partial stroke cycle in which a cylinder displaces only a proportion of a maximum stroke volume of working fluid. An inactive cycle may be a cycle in which working fluid flows both into and out of the cylinder but with no net displacement of working fluid, or a cycle in which a cylinder remains sealed from the low and high pressure manifolds and therefore makes no net displacement of working fluid.

The controller may be programmed to regulate the opening and/or closing time of at least one valve associated with each cylinder to vary the net displacement of working fluid by each cylinder during active cycles.

Accordingly, some variation in the net displacement of working fluid by the hydraulic machine, per cycle of the cam, is possible without changing the selection of one or more groups of cylinders. This enables the hydraulic machine to adapt to small changes in demand without having to change the pattern of cylinders which execute active cycles. This reduces the frequency of changes in the pattern of cylinders which execute active cycles and thereby reduces transient torque ripple which could occur when changes are made.

The invention also envisages that torque ripple may be reduced by suitable selection of the profile of cylinder volume with phase during a cycle of cylinder volume. The profile of cylinder volume with phase angle depends on several factors. Where cylinder volume is determined by pistons in driving engagement with a cam, the profile of cylinder volume with phase angle depends on the profile of the cam, the way in which the piston is driven by or drives the cam (for example, the size of a piston roller), the angle of the piston relative to the axis of rotation of the cam etc. This can readily be determine by inspection of the hydraulic machine.

The hydraulic machine may be configured so that the ratio of peak to mean flow rate from each cylinder is less than 1.40.

The peak to mean flow rate for a cylinder which has a volume which varies sinusoidally with time is 1.41, thus the hydraulic machine is preferably configured so that the ratio of peak to mean flow rate from each cylinder is less than would be the case if the cylinder volume varied sinusoidally with time.

The hydraulic machine may be configured such that, during cycles of cylinder volume, the working fluid flow rate is substantially constant at least when the phase angle of each cycle of cylinder volume is within 20° of a point midway between top dead centre and bottom dead centre. The working fluid flow rate is the rate of change of cylinder volume and so said rate of change of working fluid flow rate is the rate of change of the rate of change of cylinder volume.

Preferably, the rate of change of working fluid flow rate is substantially constant between a phase angle of 30° and 60°. In this specification and the appended claims, phase angle is measured such that it starts at 0° at the beginning of the stroke in which most work is done (the exhaust stroke for a pumping cycle and the intake stroke for a motoring cycle) and increases with time. Preferably, the rate of change of working fluid flow rate is substantially constant between a phase angle of 30° and 70°. Preferably, the rate of change of working fluid flow rate is substantially constant between a phase angle of 25° and 75°, or 25° and 80°. Substantially constant may be a variation of less than 10% or less than 5% around the mean rate of change of cylinder volume.

It may be that the plurality of cylinders are distributed between a plurality of banks of cylinders, and wherein the controller is programmed to select whether an individual cylinder undergoes an active cycle or an inactive cycle differently depending on the bank with which each cylinder is associated.

Typically, said plurality of cylinders is divided into at least a first set and a second set, wherein the selected cylinders comprise one or more groups of cylinders from the first set and one or more groups of cylinders from the second set, wherein the groups of cylinders from the first set have a first group size and the groups of cylinders from the second set have a second group size which is different to the first group size.

This arrangement can further reduce torque ripple by providing more possible displacements. Typically, the first group size is at least three and the second group size is at least four. The first set of cylinders may be arranged as a first bank of cylinders (e.g. distributed around an eccentric or cam) and the second set may be arranged as a second bank of cylinders (e.g. distributed around a different eccentric or cam). However, the first and second sets of cylinders may comprise cylinders in the same bank (e.g. distributed around the same eccentric or cam).

The controller may be configured (typically programmed) to change the selection of one or more groups of cylinders for the first set of cylinders and to change the selection of one or more groups of cylinders for the second set of cylinders at the same time.

The hydraulic machine may comprise a plurality of further cylinders, and a plurality of further valves regulating the flow of working fluid between each further cylinder and the low and high pressure working fluid lines, at least one further valve associated with each further cylinder being an electronically controlled valve, the controller being operable to actively control the opening and/or closing of the electronically controlled further valves to select whether a further cylinder undergoes an active cycle during which there is a net displacement of working fluid or an inactive cycle during which there is no net displacement of working fluid, for each further cylinder on each cycle of cylinder volume,
wherein the controller is programmed to select whether the further cylinders undergo active or inactive cycles according to an algorithm under which the selection of cylinders which undergo active cycles usually varies from one cycle of the cam to the next.

The algorithm under which the selection of cylinders which undergo active cycles usually varies from one cycle of the cam to the next may, for example, be an algorithm such as is disclosed in EP 0 361 927 (Salter) or EP 2 055 943 (Lai and Kuttler).

The invention is especially useful with large machines. Typically the hydraulic machine has a mass of greater than 1 ton. The hydraulic machine may have a mass of grater than 5 tons.

The hydraulic machine may be a hydraulic pump, or a hydraulic motor or a machine operable as a hydraulic pump or motor in alternative operating modes (a hydraulic pump-motor).

There may be a renewable energy turbine generator comprising a hydraulic circuit, the hydraulic circuit comprising a hydraulic pump driven by a turbine and a hydraulic motor driving an electricity generator, wherein either or both the hydraulic pump and the hydraulic motor are a hydraulic machine according to the invention.

There may be a method of operating a hydraulic machine according to the invention, the method comprising the steps carried out by the controller of selecting cylinders from the plurality of cylinders to undergo active cycles and then controlling the electronically controlled valves to cause each selected cylinder to undergo active cycles the remaining cylinders of the plurality of cylinders to undergo inactive cycles until the selection of cylinders is changed.

### Brief Description of Drawings

[fig.1]Figure 1 is a schematic diagram of a hydraulic pump or motor according to the invention;
[fig.2]Figure 2 is a schematic diagram of the physical location of a plurality of cylinders around a cam;
[fig.3]Figure 3 is a schematic diagram of a hydraulic machine controller;
[fig.4]Figure 4 is a flow charge of a method of operating a hydraulic machine controller in a normal operating mode;
[fig.5A]Figure 5A is a graph of displacement with time for three cylinders of equal volume which have pistons which move in a sinusoidal pattern but which are not evenly phased apart, and the sum of their displacement;
[fig.5B]Figure 5B is a graph of displacement for the same three cylinders as Figure 5A, but phased apart by 120°, and also the sum of their displacement;
[fig.6A]Figure 6A is a graph of a varying demand signal with time (e.g. amount of working fluid to be displaced, target pressure etc.);
[fig.6B]Figure 6B is a graph of showing the variation with time of actual displacement relative to the varying demand signal;
[fig.7A]Figure 7A illustrates the variation in displacement with time for a first embodiment of the machine in response to a constant demand signal;
[fig.7B]Figure 7B illustrated the variation in displacement with time for a second embodiment of the machine in response to a varying demand signal;
[fig.8A]Figure 8A is a graph of displacement for three cylinders which have pistons which move in a triangular pattern and which are evenly phased apart, and the sum of their displacements;
[fig.8B]Figure 8B illustrates the difference in peak to mean displacement between a sinusoidal and rectangular cycle;
[fig.9A]Figure 9A is a graph of flow rate with phase angle for a cam according to an embodiment of the invention, compared with a cam having a radius which varies sinusoidally with phase angle; and
[fig.9B]Figure 9B is a graph of the derivative of flow rate with phase angle for the cams shown in Figure 9A.

### Description of Embodiments

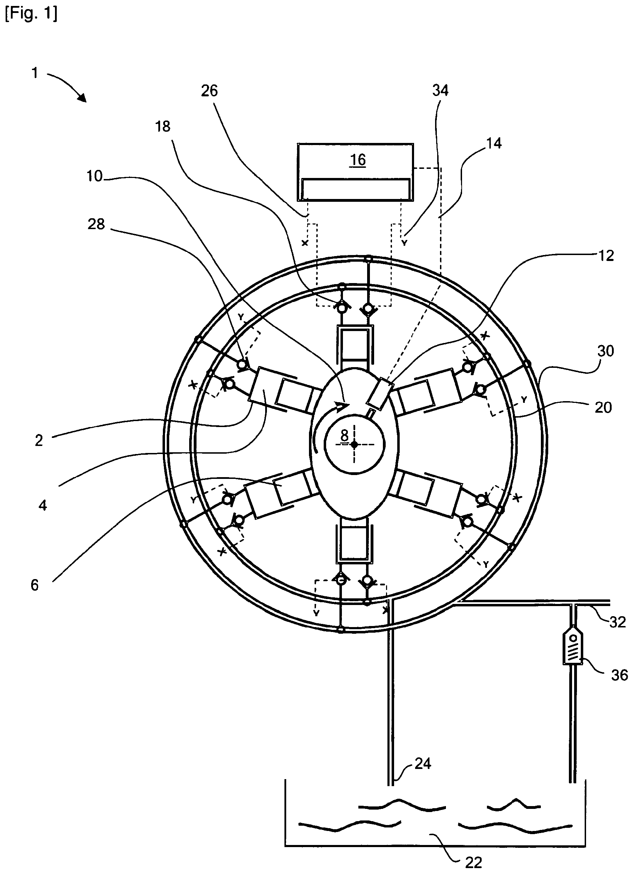

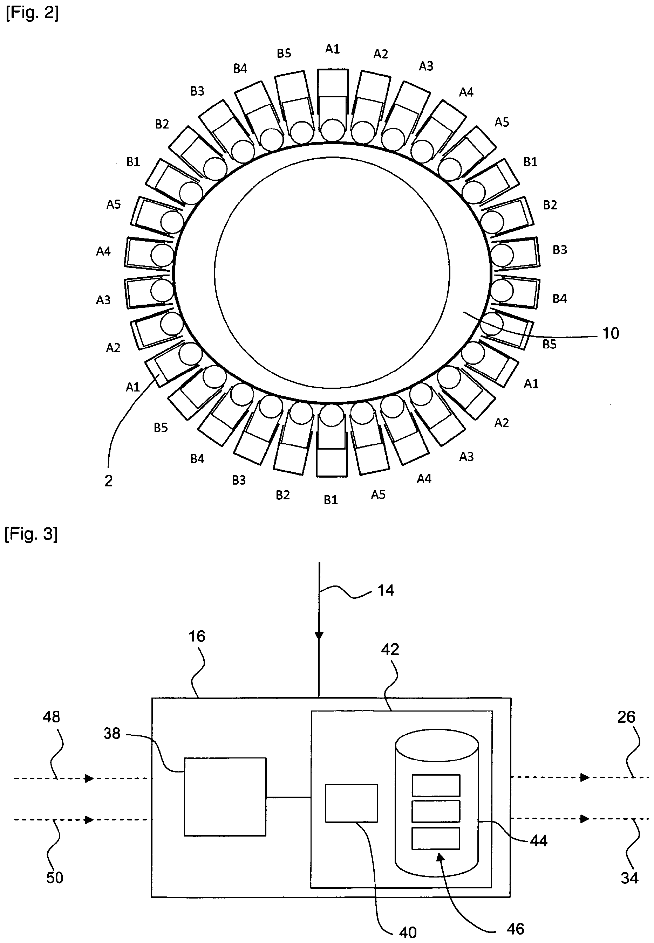

Figure 1 illustrates a fluid working machine in the form of an electronically commutated hydraulic pump/motor 1 comprising a plurality of cylinders 2 having cyclically varying cylinder volumes 4 defined between the interior surface of the cylinders and respective pistons 6 which are driven from a rotatable crankshaft 8 by a multi-lobe eccentric cam 10 thereby reciprocating within the cylinders to cyclically vary the cylinder volumes. A shaft position and speed sensor 12 determines the instantaneous angular position and speed of rotation of the shaft, and through signal line 14 informs a controller 16, which enables the controller to determine the instantaneous phase angle of the cycles of each cylinder. The controller is typically a microprocessor or microcontroller which executes a stored program in use and is described further below with reference to Figure 3.

The cylinders are each associated with Low Pressure Valves (LPV) in the form of electronically actuated face-sealing poppet valves 18, which face inwards toward their associated cylinder and are operable to selectively seal off a channel extending from the cylinder to a low pressure manifold 20, which functions generally as a net source or sink of fluid in use and may connect one or several cylinder, or indeed all as is shown here, to a reservoir 22 through a low pressure port 24. The LPVs are normally open solenoid closed valves which open passively when the pressure within the cylinder is less than the pressure within the low pressure manifold, i.e. during an intake stroke, to bring the cylinder into fluid communication with the low pressure manifold, but are selectively closable under the active control of the controller via LPV control lines 26 (connections are implied by X's in most cases to simplify the diagram) to bring the cylinder out of fluid communication with the low pressure manifold. Alternative electronically controllable valves may be employed, such as normally closed solenoid opened valves.

The cylinders are each further associated with High Pressure Valves (HPV) 28 which face outwards from the cylinders and are operable to seal off a channel extending from the cylinder to a high pressure manifold 30, which functions as a net source or sink of fluid in use and which may connect one or several cylinders, or indeed all as is shown here, to a high pressure port 32 leading to a high pressure manifold, which would typically be connected to a load if the hydraulic machine is to be used as a pump and a source of pressurised oil (as working fluid) if the hydraulic machine is to be used as a motor. In some embodiments, the hydraulic machine may function as either a pump or a motor.

In the case of a hydraulic machine operating only as a hydraulic pump, the HPVs may be normally-closed pressure-opening check valves which open passively when the pressure within the cylinder exceeds the pressure within the high pressure manifold. In the present example, the HPVs are normally-closed solenoid opened check valves which the controller may selectively hold open once HPV is opened by pressure within the associated cylinder, using HPV control lines 34 (connections are implied by Y's in most cases to simplify the diagram). A pressure relief valve 36 may protect the fluid working machine from damage.

In normal operation, as described in EP 0 361 927, EP 0 494 236, EP 1 537 333 and EP 2 055 943, for example, the volume of working fluid displaced by each cylinder is controlled for each cycle of cylinder volume by active control of the HPV and LPV associated with the respective cylinder. (In the case of a hydraulic pump, active control of the HPV is optional and a pressure operated check valve may be employed). Active control can involve using energy to open, close, hold open or hold closed a valve. In the case of an active pumping cycle, the controller closes the LPV associated with a cylinder near the point of maximum volume in the associated cylinder volume cycle, closing the path to the low pressure manifold and thereby directing fluid out through the associated HPV on the subsequent contraction stroke. In the case of an active motoring cycle, the controller closes the HPV associated with a cylinder during the intake stroke (shortly before the point of maximum volume in the associated cylinder volume cycle in the case of a maximum volume active cycle) and then opens the LPV associated with the cylinder once pressure in the cylinder has dropped sufficiently so that working fluid is displaced to the low pressure manifold during the exhaust stroke. In order to achieve an inactive cycle, the LPV may be maintained in the open position so that working fluid is received from the low pressure manifold during the intake stroke and returned to the low pressure manifold during the exhaust stroke, or maintained in the closed position so that the cylinder remains sealed through a cycle of cylinder volume.

Figure 1 illustrates an embodiment with a single bank of 6 cylinders arranged around a cam. Figure 2 is a schematic diagram of the physical arrangement of 30 cylinders around a cam. (In practice, the cylinders may be located outside the cam, within the cam in the case of an inward facing ring cam, or even adjacent the cam in an arrangement where each cylinder has an axis parallel to the axis of the cam) The phase angle difference between any two cylinders will depend on the number of lobes (cycles of maximum and minimum radius) of the ring cam. For example, if there are an odd number of lobes (e.g. 1, 3, etc.) opposite cylinders will be in antiphase. If there are an even numbers of lobes (e.g. 2, 4 etc.) opposite cylinders will be in phase. In Figure 2, the cylinders are labelled appropriately for a ring cam with 2 lobes.

With reference to Figure 3, the controller 16 continuously receives a measurement of the position of the shaft through signal line 14. A microprocessor or microcontroller 38 executes a program 40 stored in memory 42 on the basis of which it generates LPV control signals transmitted through LPV control lines 26 and HPV control signals transmitted through HPV control lines 34. In order to determine which cylinders should carry out active cycles, the memory also stores a database 44 with records defining groups 46 of cylinders (functioning as group data). The controller also receives a demand signal 48 indicative of a desired displacement of the machine or desired value of a parameter related to the displacement of the machine (e.g. the pressure in the high pressure manifold) and an output signal 50 representing a parameter related to the output of the machine (e.g. a measurement of the pressure in the high pressure manifold) which is required for feedback to enable the controller to determine how to select cylinders to meet the demand.

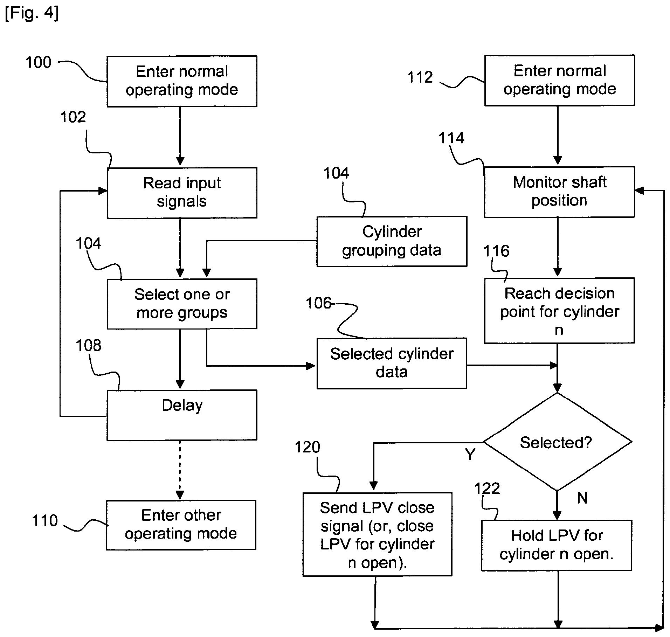

With reference to Figure 4, once normal operation of the hydraulic machine starts 100 (possibly after operation in another operating mode, for example a start up mode), the controller reads received data 102 including shaft position (which can be monitored to determine shaft speed), the demand signal and the output signal. It also reads the stored group data 46. On the basis of this data it selects 104 one or more group of cylinders and outputs selected cylinder data 106 (which may comprise identifiers of individual cylinders, or identifiers of the selected groups of cylinders, for example). After a delay 108 the process of selecting cylinders is repeated. The selection of cylinders is usually changed infrequently in comparison with the maximum frequency at which the selection of cylinders could be changed. Cylinder selection may be reviewed periodically, although it may be reviewed on a more continuous basis. The process continues until the machine enters another operating mode 110, for example, a mode in which it adopts a known algorithm for selecting cylinders in which the displacement of each cylinder is selected for each individual cycle of cylinder volume in order to most closely match output to a demand signal to obtain more accurate control during a shut-down procedure.

In parallel, during the normal operating mode 112, shaft position is monitored continuously 114 and whenever a decision point is reached 116 which will determine whether an individual cylinder undergoes an active or idle cycle (for example, the decision as to whether or not to close the LPV just before the point of minimum cylinder volume to select a pumping cycle or an idle cycle), it is determined 118 whether that individual cylinder is selected, using the selected cylinder data (with referenced to the cylinder grouping data if required). If it is, then the appropriate valve actuation signal is sent 120 by the controller to cause an active cycle to take place (and any further valve actuation signals required to complete the cycle are scheduled). Otherwise an inactive cycle takes place, for example, by holding the LPV open 122. One skilled in the art will appreciate that although these procedures are illustrated as computer programs with continuous flow, they may be implemented in an event driven manner, for example. The net effect is that, until the selection of cylinders is changed, every selected cylinder undergoes an active cycle on each cycle of cylinder volume and each unselected cylinder, from amongst those which are controlled in this way, undergoes an inactive cycle on each cycle of cylinder volume.

In some embodiments, the controller will also select the fraction of maximum displacement which should be displaced by each cylinder on each active cycle, in which case valve timings are adjusted appropriately to obtain the desired volume. In practice, the possible range of fractions of maximum displacement includes relatively low and relatively high displacements, for example 0-10% and 90-100% of maximum displacement. Typically, there will be a range of displacements either side of 50% of maximum displacement which are not possible. This is because actively opening or closing a valve against the pressure difference found in the middle of a stroke involves substantial forces and it would require a large and energy consuming valve to be able to open or close against such forces. Furthermore, the speed at which the valve would move would be very high, risking damage unless the valve was especially substantial, which would lead to an inefficient machine. Even if active closing is carried out by stopping a force which was holding a valve open, the problem of rapid valve movement would still apply.

With reference to Figure 2, the grouping data is chosen so that individual groups comprise cylinders which, due to the phase difference between them, minimise output torque ripple. In this example there is a ring cam which has two lobes and cylinders spaced apart by 120° are phased apart by 120° (e.g. 0°, 240°, 480°). Each group comprises 3 cylinders spaced apart and phased apart by 120°. The cylinders in the same group have the same labelling, e.g. A1, A2 etc. Thus, selection of the cylinders with the same label will be correlated.

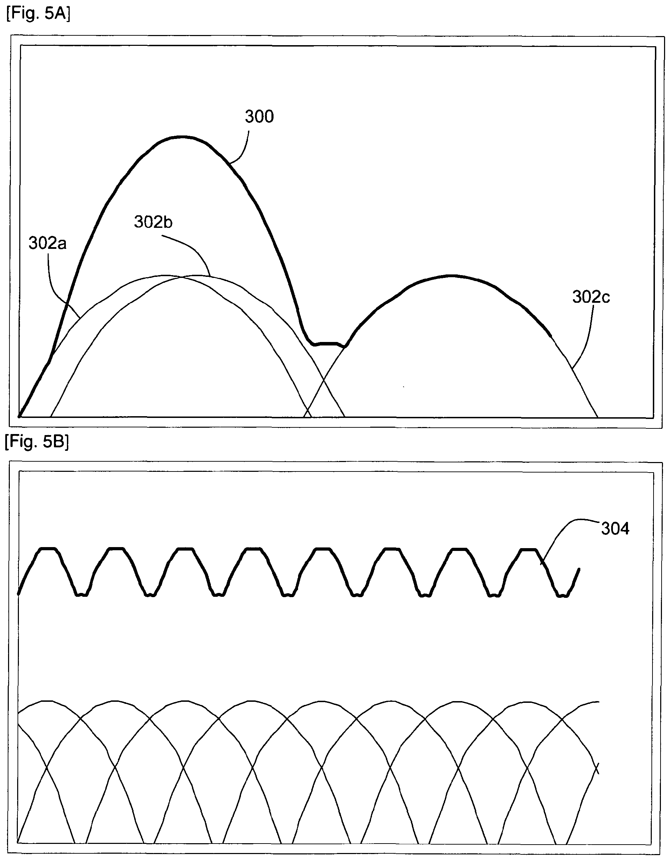

In known control methods in which a decision as to whether to undertake an active or inactive cycle is made independently for each cylinder, without any correlation, there can be substantial changes in output torque. This is illustrated in Figure 5A which shows the displacement 302a, 302b and 302c by three individuals 30 cylinders and the sum of that displacement 300 which varies substantially, and as a direct result there is substantial torque ripple. In contrast, as there is an equal phasing between the cylinders in each group, the total output displacement 304, shown in Figure 58, is as smooth as is possible, reducing torque ripple. For cylinders which are operated with a sinusoidal variation in cylinder volume (leading to a sinusoidal variation in displacement during the intake stroke of a motoring cycle or exhaust stroke of a pumping 40 cycle), this minimum of torque ripple arises whenever the phase angle of the cylinders in a group is spaced apart by 360° / n where n is the number of cylinders in the group.

If a single group of cylinders is selected, e.g. the three labelled A1, there will be a net force acting on the crankshaft through the cam and therefore acting on the bearings which retain the crankshaft. This force arises from the unbalanced forces exerted by the individual cylinders, which are operated phased 120° apart.

However, where possible, pairs of groups are selected, such that, for each first selected cylinder there is another second selected cylinder which is physically directly opposite and in phase with the first selected cylinder. For example, the group of cylinders A1 and the group of cylinders B1 can be selected at the same time. In this case, the net forces acting on the crankshaft and therefore the bearing side load will be approximately zero.

The illustrated example machine can therefore be operated in 11 displacements:
0% output No groups
10% output A1 selected
20% output A1, B1 selected
30% output A1, B1, A2 selected
40% output A1, B1, A2, B2 selected
50% output A1, B1, A2, B2, A3 selected
60% output A1, B1, A2, B2, A3, B3 selected
70% output A1, B1, A2, B2, A3, B3, A4 selected
80% output A1, B1, A2, B2, A3, B3, A4, B4 selected
90% output A1, B1, A2, B2, A3, B3, A4, B4, A5 selected
100% output A1, B1, A2, B2, A3, B3, A4, B4, A5, B5 selected

It will be seen that at 20%, 40%, 60%, 80% and 100% there is substantially no bearing side load. At 10%, 30%, 50%, 70% and 90% there is some bearing side load arising from unbalanced forces from the cylinders in a single group. However, this should not be too substantial and is less than may arise if there was no correlation between which cylinders were selected for a given displacement.

For some group sizes, it is possible for each individual group to be selected to minimise torque ripple and bearing side load on its own, for example, this is possible with groups of 4 cylinders, physically located in 2 opposed pairs.

Prior art methods for selecting cylinders select the displacement of each individual cylinder to best match time averaged output displacement to a demand signal. There will be slight differences between actual output and demanded output, however these will usually be less than the maximum displacement of an individual cylinder. Over a sufficiently long period of time, the average displacement can have any value, referred to as infinitely variable displacement.

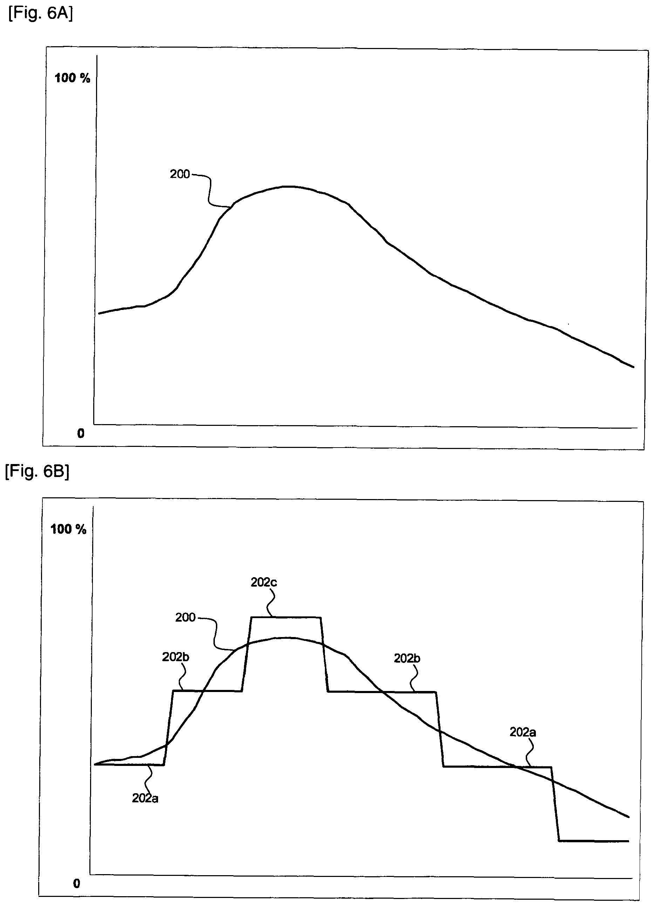

The output is always provided by one of a plurality of discrete fractions of the available cylinders, depending on the number of cylinders which are selected. Torque ripple is therefore reduced as the cylinders in each group are selected to minimise torque ripple and, as described above, bearing side load is also reduced. Figure 6A illustrates an example demand signal 200. A prior art machine would try to match output displacement to the example demand signal as closely as possible by determining whether to select individual cylinders to carry out active cycles, without any correlation between which cylinders are selected. However, with reference to Figure 6B, a machine simply changes between discrete output levels 202a, 202b, 202c, maintained for a period equal to at least the period of a cycle of cylinder volume, thereby reducing torque ripple.

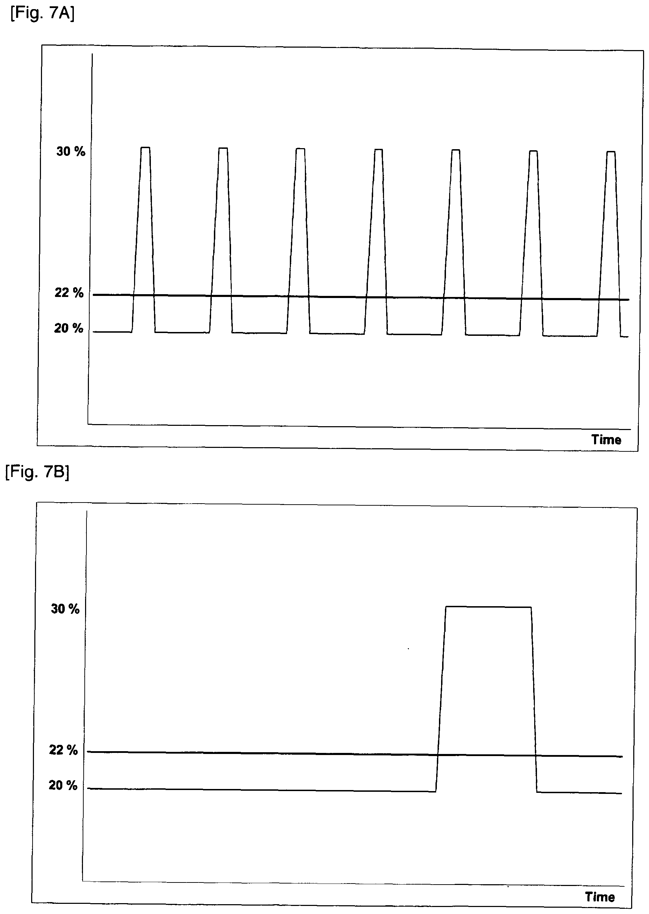

Figure 7A illustrates the response of one embodiment of the machine which has possible displacements that are multiples of 10% of the maximum output displacement. In order to meet a constant demand signal of 22% of maximum output, it might operate at 20% of the maximum output displacement for four cycles of cylinder volume (e.g. four rotations of the crankshaft if the cam is single lobe, and therefore has one cycle per rotation, two rotations if the cam is double lobe and therefore has two cycles per rotation etc.) and then operate at 30% of the maximum output displacement for one cycle of cylinder volume. However, with reference to Figure 7B an alternative embodiment with the same x axis scale as Figure 7A the controller changes the selection of cylinders infrequently, and might operate at 20% of the maximum output displacement for forty cycles of cylinder volume before operating at 30% of the maximum output displacement for ten cycles of cylinder volume, for example. This reduces transient torque ripple and bearing side load which can arise when the pattern of cylinder selection changes.

As described above with references to Figures 5A and 5B, the torque ripple which can arise when cylinders are selected at random can be substantial, and the difference between maximum and minimum torque is a high proportion of the mean torque. This can be reduced by phasing cylinders apart by 360° /n. It can be seen that the torque ripple is reduced by this even phase difference between each cylinder.

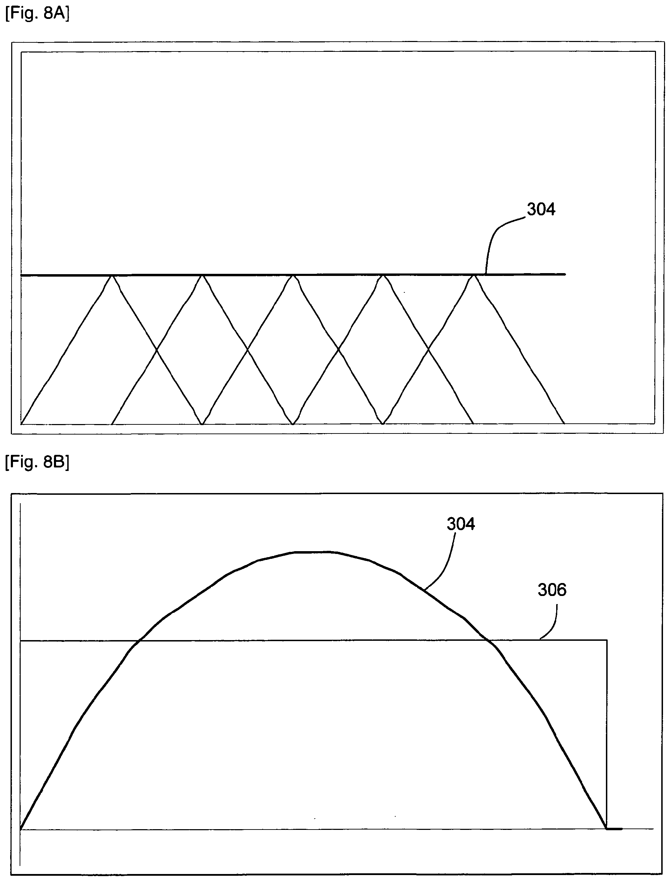

The torque ripple can be further reduced by selection of the profile of cylinder volume with phase angle. This can, for example, be achieved by amending the shape of a cam taking into account the configuration of the cylinders, the angle and position of cam followers (such as piston shoes or wheels) etc. For a perfect triangular variation in cylinder volume with time (during the intake or exhaust stroke as appropriate), shown in Figure 8A, there is no torque ripple if the phase angle difference between the cylinders is 360° / n where n is an even integer. For a group of three cylinders this can be achieved if the phase angle difference between each cylinder is 120° and the exhaust stroke of each cylinder spans a phase angle of 240°. In practice it is difficult to obtain a perfect triangular variation in cylinder volume and so more typically one would aim to obtain part of this effect when selecting the profile of the cam. Thus, the invention envisages selecting the cam profile to reduce the ratio of peak to mean displacement (during the intake or exhaust stroke as appropriate) from the square root of 2 (which is the case for sinusoidal profiles 304) towards 1.0 (which is the case for triangular variation in cylinder volume leading to rectangular displacement 306). This is illustrated in Figure 8B.

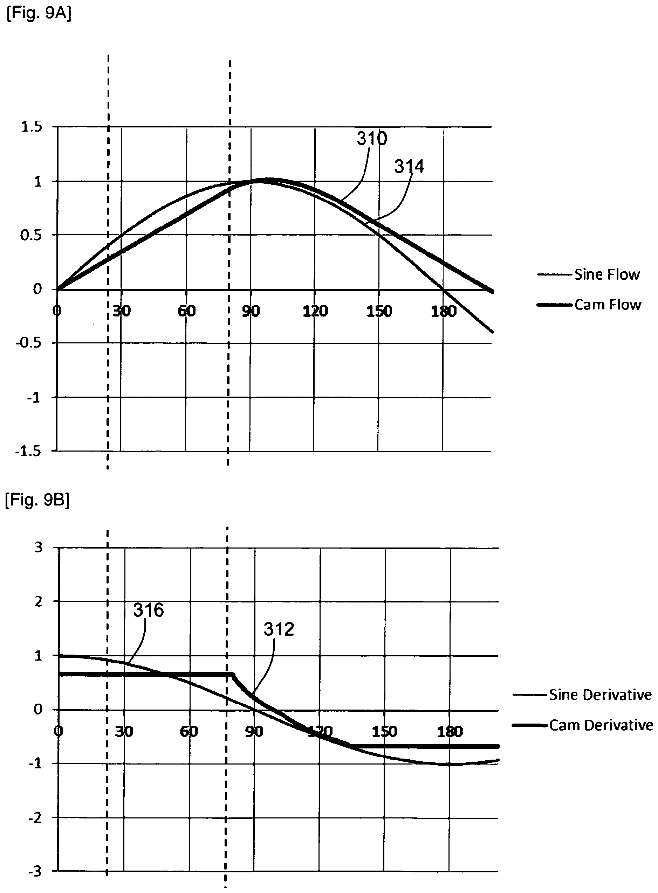

Peaks in torque ripple typically arise when cylinders are at a point in a cycle of cylinder volume when they reach a peak of rate of change of cylinder volume, and therefore rate of displacement. For a cylinder with a piston following a sinusoidal profile, this occurs midway between the points of maximum and minimum cylinder volume. In some embodiments of the invention the cam profile is selected so that the rate of change of cylinder volume with time is substantially constant for a period of time either side of half way through the point where there is maximum displacement, at a phase angle of 90° relative to the beginning of the exhaust stroke of a pumping cycle of the beginning of the intake stroke of a motoring cycle. Figures 9A and 9B illustrate the profile of a flow generated by a suitable cam 310, and the derivative 312 of that flow with phase angle, in showing that the derivative is substantially constant between a phase angle of 25 to 80°, where phase angle is measured from 0° at the beginning of the exhaust stroke (bottom dead centre) in the case of a pumping cycle and the intake stroke in the case of a motoring cycle. This is compared with the sinusoidal flow profile 314 and derivative 316 generated by a different cam.

One skilled in the art will appreciate that different types of grouping could be employed to minimise torque ripple in which there is uneven phasing between cylinders in the group and an asymmetric profile of cam height with phase angle.

In some embodiments, the grouping of cylinder may be changed by editing the stored group data. This may take place periodically, for example, to distribute wear amongst the cylinders. This may take place responsive to an event, for example, responsive to detection that a cylinder is not operating correctly due to a fault.

The operating methods described above may apply for all of the cylinders in a hydraulic machine, or only some of the cylinders. In some embodiments, some of the cylinders in the hydraulic machine (first cylinders) are operated by the methods described herein in which the selected cylinders are one or more groups of 3 cylinders, for example, and some of the cylinders (second cylinders) might be operated by the method described above but where the cylinders which are selected from the second cylinders are one or more groups of a different number of cylinders, for example 4. This can further reduce torque ripple as torque ripple arising from the operation of the first cylinders and operation of the second cylinders only relates to a proportion of the cylinders of the machine. The first cylinders and second cylinders might be arranged as separate banks of cylinders or they may each be distributed across multiple banks of cylinders.

In some embodiments, there will be further cylinders which are operated according to a different algorithm, for example a conventional algorithm which selects whether each individual cylinder should undergo an active or inactive cycle on each cycle of cylinder volume, without correlation between the cylinders which are selected. The further cylinders may be arranged on a separate bank. This can allow the benefits of reduced torque ripple and/or bearing side load to be achieved in part while also achieving in part the benefits of conventional algorithms (rapid response to changes in demand).

Further variations and modifications may be made within the scope of the invention herein disclosed.

### Reference Signs List

- 1: Electronically commutated hydraulic pump/motor
- 2: Cylinder
- 4: Cylinder volume
- 6: Piston
- 8: Crankshaft
- 10: Multi-lobe eccentric cam
- 12: Shaft position and speed sensor
- 14: Signal line
- 16: Controller
- 18: Low pressure valve (LPV)
- 20: Low pressure manifold 20
- 22: Reservoir
- 24: Low pressure port
- 26: LPV control lines
- 28: High Pressure Valve (HPV)
- 30: High pressure manifold
- 32: High pressure port
- 34: HPV control lines
- 36: Pressure relief valve
- 38: Microprocessor or microcontroller
- 40: Stored program
- 42: Memory
- 44: Database
- 46: Grouping data
- 48: Demand signal
- 50: Output signal
- 100: Step of machine starting normal operating mode
- 102: Step of reading received data
- 104: Step of selecting cylinders
- 106: Step of output selected cylinder data
- 108: Delay
- 110: Step of entering another operating mode
- 112: Step of machine starting normal operating mode
- 114: Step of monitoring shaft position
- 116: Decision point
- 118: Step of determining whether individual cylinder selected
- 120: Step of sending valve actuation signal
- 112: Step of holding open LPV
- 200: Demand signal
- 202a, 202b, 202c: Discrete output levels
- 300: Sum of displacement
- 302a, 302b, 302c: Displacement from individual cylinders
- 304: Total output displacement
- 310: Flow profile
- 312: Derivative of flow profile

## Claims

1. A hydraulic machine comprising a controller (16), a plurality of cylinders (2), a low pressure working fluid line (20), a high pressure working fluid line (30), and a plurality of valves (18, 28) regulating the flow of working fluid between each cylinder and the low and high pressure working fluid lines (20, 30), at least one valve associated with each cylinder being an electronically controlled valve, the controller (16) being operable to actively control the opening and/or closing of the electronically controlled valves to select whether a cylinder undergoes an active cycle during which there is a net displacement of working fluid or an inactive cycle during which there is no net displacement of working fluid, for each cylinder on each cycle of cylinder volume (4),
wherein the controller (16) is configured to cause selected cylinders to undergo active cycles and the remainder of said plurality of cylinders to undergo inactive cycles, wherein the selected cylinders form one or more groups of cylinders, so that there is a correlation between cylinders in each group undergoing active cycles,
**characterized in that** the hydraulic machine further comprises a database (44) for storing cylinder group data (46) which defines a plurality of cylinder groups each including correlated cylinders, and wherein the controller (16) is configured to select (104) one or more groups of cylinders to undergo the active cycles from the plurality of cylinder groups defined by the stored cylinder group data (46), wherein, during normal operation, the selection of cylinders is changed less frequently than would be required to best match actual displacement to a displacement demand signal by selecting one or more groups of cylinders, from amongst a plurality of groups of cylinders, with a frequency equal to the frequency of cycles of cylinder volume (4).

2. A hydraulic machine comprising a controller (16), a plurality of cylinders (2), a low pressure working fluid line (20), a high pressure working fluid line (30), and a plurality of valves (18, 28) regulating the flow of working fluid between each cylinder and the low and high pressure working fluid lines (20, 30), at least one valve associated with each cylinder being an electronically controlled valve, the controller (16) being operable to actively control the opening and/or closing of the electronically controlled valves to select whether a cylinder undergoes an active cycle during which there is a net displacement of working fluid or an inactive cycle during which there is no net displacement of working fluid, for each cylinder on each cycle of cylinder volume (4),
wherein the controller (16) is configured to cause selected cylinders to undergo active cycles and the remainder of said plurality of cylinders to undergo inactive cycles, wherein the selected cylinders form one or more groups of cylinders, so that there is a correlation between cylinders in each group undergoing active cycles,
**characterized in that** the hydraulic machine further comprises a database (44) for storing cylinder group data (46) which defines a plurality of cylinder groups each including correlated cylinders, and wherein the controller (16) is configured to select (104) one or more groups of cylinders to undergo the active cycles from the plurality of cylinder groups defined by the stored cylinder group data (46), wherein, during normal operation, the selection of cylinders is usually changed less frequently than the frequency of cycles of cylinder volume (4).

3. A hydraulic machine comprising a controller (16), a plurality of cylinders (2), a low pressure working fluid line (20), a high pressure working fluid line (30), and a plurality of valves (18, 28) regulating the flow of working fluid between each cylinder and the low and high pressure working fluid lines (20, 30), at least one valve associated with each cylinder being an electronically controlled valve, the controller (16) being operable to actively control the opening and/or closing of the electronically controlled valves to select whether a cylinder undergoes an active cycle during which there is a net displacement of working fluid or an inactive cycle during which there is no net displacement of working fluid, for each cylinder on each cycle of cylinder volume (4),
wherein the controller (16) is configured to cause selected cylinders to undergo active cycles and the remainder of said plurality of cylinders to undergo inactive cycles, wherein the selected cylinders form one or more groups of cylinders, so that there is a correlation between cylinders in each group undergoing active cycles,
**characterized in that** the hydraulic machine further comprises a database (44) for storing cylinder group data (46) which defines a plurality of cylinder groups each including correlated cylinders, and wherein the controller (16) is configured to select (104) one or more groups of cylinders to undergo the active cycles from the plurality of cylinder groups defined by the stored cylinder group data (46),
wherein the controller (16) is programmed to change the cylinder grouping data (46) to change the cylinders which make up at least one of the groups during operation, or to change the circumstances under which at least one of the groups is selected, under some circumstances.

4. A hydraulic machine comprising a controller (16), a plurality of cylinders (2), a low pressure working fluid line (20), a high pressure working fluid line (30), and a plurality of valves (18, 28) regulating the flow of working fluid between each cylinder and the low and high pressure working fluid lines (20, 30), at least one valve associated with each cylinder being an electronically controlled valve, the controller (16) being operable to actively control the opening and/or closing of the electronically controlled valves to select whether a cylinder undergoes an active cycle during which there is a net displacement of working fluid or an inactive cycle during which there is no net displacement of working fluid, for each cylinder on each cycle of cylinder volume (4),
wherein the controller (16) is configured to cause selected cylinders to undergo active cycles and the remainder of said plurality of cylinders to undergo inactive cycles, wherein the selected cylinders form one or more groups of cylinders, so that there is a correlation between cylinders in each group undergoing active cycles,
**characterized in that** the hydraulic machine further comprises a database (44) for storing cylinder group data (46) which defines a plurality of cylinder groups each including correlated cylinders, and wherein the controller (16) is configured to select (104) one or more groups of cylinders to undergo the active cycles from the plurality of cylinder groups defined by the stored cylinder group data (46),
wherein the hydraulic machine is configured so that the ratio of peak to mean flow rate from each cylinder is less than 1.40.

5. A hydraulic machine comprising a controller (16), a plurality of cylinders (2), a low pressure working fluid line (20), a high pressure working fluid line (30), and a plurality of valves (18, 28) regulating the flow of working fluid between each cylinder and the low and high pressure working fluid lines (20, 30), at least one valve associated with each cylinder being an electronically controlled valve, the controller (16) being operable to actively control the opening and/or closing of the electronically controlled valves to select whether a cylinder undergoes an active cycle during which there is a net displacement of working fluid or an inactive cycle during which there is no net displacement of working fluid, for each cylinder on each cycle of cylinder volume (4),
wherein the controller (16) is configured to cause selected cylinders to undergo active cycles and the remainder of said plurality of cylinders to undergo inactive cycles, wherein the selected cylinders form one or more groups of cylinders, so that there is a correlation between cylinders in each group undergoing active cycles,
**characterized in that** the hydraulic machine further comprises a database (44) for storing cylinder group data (46) which defines a plurality of cylinder groups each including correlated cylinders, and wherein the controller (16) is configured to select (104) one or more groups of cylinders to undergo the active cycles from the plurality of cylinder groups defined by the stored cylinder group data (46),
wherein the hydraulic machine is configured such that, during cycles of cylinder volume (4), the rate of change of working fluid flow rate is substantially constant when the phase angle of cycles of cylinder volume (4) is between 25 degrees and 80 degrees, where phase angle is measured from 0° at the beginning of the exhaust.

6. A hydraulic machine comprising a controller (16), a plurality of cylinders (2), a low pressure working fluid line (20), a high pressure working fluid line (30), and a plurality of valves (18, 28) regulating the flow of working fluid between each cylinder and the low and high pressure working fluid lines (20, 30), at least one valve associated with each cylinder being an electronically controlled valve, the controller (16) being operable to actively control the opening and/or closing of the electronically controlled valves to select whether a cylinder undergoes an active cycle during which there is a net displacement of working fluid or an inactive cycle during which there is no net displacement of working fluid, for each cylinder on each cycle of cylinder volume (4),
wherein the controller (16) is configured to cause selected cylinders to undergo active cycles and the remainder of said plurality of cylinders to undergo inactive cycles, wherein the selected cylinders form one or more groups of cylinders, so that there is a correlation between cylinders in each group undergoing active cycles,
**characterized in that** the hydraulic machine further comprises a database (44) for storing cylinder group data (46) which defines a plurality of cylinder groups each including correlated cylinders, and wherein the controller (16) is configured to select (104) one or more groups of cylinders to undergo the active cycles from the plurality of cylinder groups defined by the stored cylinder group data (46),
wherein the working fluid flow rate is substantially constant at least when the phase angle of each cycle of cylinder volume (4) is within 20° of a point midway between top dead centre and bottom dead centre.

7. A hydraulic machine comprising a controller (16), a plurality of cylinders (2), a low pressure working fluid line (20), a high pressure working fluid line (30), and a plurality of valves (18, 28) regulating the flow of working fluid between each cylinder and the low and high pressure working fluid lines (20, 30), at least one valve associated with each cylinder being an electronically controlled valve, the controller (16) being operable to actively control the opening and/or closing of the electronically controlled valves to select whether a cylinder undergoes an active cycle during which there is a net displacement of working fluid or an inactive cycle during which there is no net displacement of working fluid, for each cylinder on each cycle of cylinder volume (4),
wherein the controller (16) is configured to cause selected cylinders to undergo active cycles and the remainder of said plurality of cylinders to undergo inactive cycles, wherein the selected cylinders form one or more groups of cylinders, so that there is a correlation between cylinders in each group undergoing active cycles,
**characterized in that** the hydraulic machine further comprises a database (44) for storing cylinder group data (46) which defines a plurality of cylinder groups each including correlated cylinders, and wherein the controller (16) is configured to select (104) one or more groups of cylinders to undergo the active cycles from the plurality of cylinder groups defined by the stored cylinder group data (46),
wherein the hydraulic machine further comprises a plurality of further cylinders, and a plurality of further valves regulating the flow of working fluid between each further cylinder and the low and high pressure working fluid lines, at least one further valve associated with each further cylinder being an electronically controlled valve, the controller (16) being operable to actively control the opening and/or closing of the electronically controlled further valves to select whether a further cylinder undergoes an active cycle during which there is a net displacement of working fluid or an inactive cycle during which there is no net displacement of working fluid, for each further cylinder on each cycle of cylinder volume,
wherein the controller (16) is programmed to select whether the further cylinders undergo active or inactive cycles according to an algorithm under which the selection of cylinders which undergo active cycles usually varies from one cycle of the cam to the next.

## Patentansprüche

1. Hydraulische Maschine, umfassend eine Steuerung (16), mehrere Zylinder (2), eine Niederdruckarbeitsfluidleitung (20), eine Hochdruckarbeitsfluidleitung (30) und mehrere Ventile (18, 28), die den Arbeitsfluidstrom zwischen jedem Zylinder und der Nieder- und Hochdruckarbeitsfluidleitung (20, 30) regeln, wobei mindestens ein jedem Zylinder zugeordnetes Ventil ein elektronisch gesteuertes Ventil ist, wobei die Steuerung (16) dahingehend betreibbar ist, das Öffnen und/oder Schließen der elektronisch gesteuerten Ventile für jeden Zylinder bei jedem Zyklus des Zylindervolumens (4) aktiv zu steuern, um auszuwählen, ob ein Zylinder einen aktiven Zyklus, während dessen eine Nettoverdrängung von Arbeitsfluid stattfindet, oder einen inaktiven Zyklus, während dessen keine Nettoverdrängung von Arbeitsfluid stattfindet, durchläuft,
wobei die Steuerung (16) dazu konfiguriert ist, zu bewirken, dass ausgewählte Zylinder aktive Zyklen durchlaufen und der Rest der mehreren Zylinder inaktive Zyklen durchläuft, wobei die ausgewählten Zylinder eine oder mehrere Gruppen von Zylindern bilden, so dass es zwischen Zylindern in jeder Gruppe, die aktive Zyklen durchlaufen, eine Korrelation gibt,
**dadurch gekennzeichnet, dass** die hydraulische Maschine ferner eine Datenbank (44) zum Speichern von Zylindergruppendaten (46) umfasst, die mehrere Zylindergruppen definieren, die jeweils korrelierte Zylinder enthalten, und wobei die Steuerung (16) dazu konfiguriert ist, eine oder mehrere Gruppen von Zylindern zum Durchlaufen der aktiven Zyklen aus den mehreren Zylindergruppen auszuwählen (104), die durch die gespeicherten Zylindergruppendaten (46) definiert werden, wobei bei normalem Betrieb die Auswahl von Zylindern weniger häufig geändert wird, als es erforderlich wäre, um die tatsächliche Verdrängung am besten an ein Verdrängungsanforderungssignal anzupassen, indem eine oder mehrere Gruppen von Zylindern unter mehreren Gruppen von Zylindern mit einer Frequenz gleich der Frequenz von Zyklen des Zylindervolumens (4) ausgewählt werden.

2. Hydraulische Maschine, umfassend eine Steuerung (16), mehrere Zylinder (2), eine Niederdruckarbeitsfluidleitung (20), eine Hochdruckarbeitsfluidleitung (30) und mehrere Ventile (18, 28), die den Arbeitsfluidstrom zwischen jedem Zylinder und der Nieder- und Hochdruckarbeitsfluidleitung (20, 30) regeln, wobei mindestens ein jedem Zylinder zugeordnetes Ventil ein elektronisch gesteuertes Ventil ist, wobei die Steuerung (16) dahingehend betreibbar ist, das Öffnen und/oder Schließen der elektronisch gesteuerten Ventile für jeden Zylinder bei jedem Zyklus des Zylindervolumens (4) aktiv zu steuern, um auszuwählen, ob ein Zylinder einen aktiven Zyklus, während dessen eine Nettoverdrängung von Arbeitsfluid stattfindet, oder einen inaktiven Zyklus, während dessen keine Nettoverdrängung von Arbeitsfluid stattfindet, durchläuft,
wobei die Steuerung (16) dazu konfiguriert ist, zu bewirken, dass ausgewählte Zylinder aktive Zyklen durchlaufen und der Rest der mehreren Zylinder inaktive Zyklen durchläuft, wobei die ausgewählten Zylinder eine oder mehrere Gruppen von Zylindern bilden, so dass es zwischen Zylindern in jeder Gruppe, die aktive Zyklen durchlaufen, eine Korrelation gibt,
**dadurch gekennzeichnet, dass** die hydraulische Maschine ferner eine Datenbank (44) zum Speichern von Zylindergruppendaten (46) umfasst, die mehrere Zylindergruppen definieren, die jeweils korrelierte Zylinder enthalten, und wobei die Steuerung (16) dazu konfiguriert ist, eine oder mehrere Gruppen von Zylindern zum Durchlaufen der aktiven Zyklen aus den mehreren Zylindergruppen auszuwählen (104), die durch die gespeicherten Zylindergruppendaten (46) definiert werden, wobei bei normalem Betrieb die Auswahl von Zylindern in der Regel weniger häufig als die Frequenz von Zyklen des Zylindervolumens (4) geändert wird.

3. Hydraulische Maschine, umfassend eine Steuerung (16), mehrere Zylinder (2), eine Niederdruckarbeitsfluidleitung (20), eine Hochdruckarbeitsfluidleitung (30) und mehrere Ventile (18, 28), die den Arbeitsfluidstrom zwischen jedem Zylinder und der Nieder- und Hochdruckarbeitsfluidleitung (20, 30) regeln, wobei mindestens ein jedem Zylinder zugeordnetes Ventil ein elektronisch gesteuertes Ventil ist, wobei die Steuerung (16) dahingehend betreibbar ist, das Öffnen und/oder Schließen der elektronisch gesteuerten Ventile für jeden Zylinder bei jedem Zyklus des Zylindervolumens (4) aktiv zu steuern, um auszuwählen, ob ein Zylinder einen aktiven Zyklus, während dessen eine Nettoverdrängung von Arbeitsfluid stattfindet, oder einen inaktiven Zyklus, während dessen keine Nettoverdrängung von Arbeitsfluid stattfindet, durchläuft,
wobei die Steuerung (16) dazu konfiguriert ist, zu bewirken, dass ausgewählte Zylinder aktive Zyklen durchlaufen und der Rest der mehreren Zylinder inaktive Zyklen durchläuft, wobei die ausgewählten Zylinder eine oder mehrere Gruppen von Zylindern bilden, so dass es zwischen Zylindern in jeder Gruppe, die aktive Zyklen durchlaufen, eine Korrelation gibt,
**dadurch gekennzeichnet, dass** die hydraulische Maschine ferner eine Datenbank (44) zum Speichern von Zylindergruppendaten (46) umfasst, die mehrere Zylindergruppen definieren, die jeweils korrelierte Zylinder enthalten, und wobei die Steuerung (16) dazu konfiguriert ist, eine oder mehrere Gruppen von Zylindern zum Durchlaufen der aktiven Zyklen aus den mehreren Zylindergruppen auszuwählen (104), die durch die gespeicherten Zylindergruppendaten (46) definiert werden, wobei die Steuerung (16) dazu programmiert ist, unter gewissen Umständen die Zylindergruppierungsdaten (46) zu ändern, um während des Betriebs die Zylinder zu wechseln, die mindestens eine der Gruppen bilden, oder um die Umstände zu ändern, unter denen mindestens eine der Gruppen ausgewählt wird.

4. Hydraulische Maschine, umfassend eine Steuerung (16), mehrere Zylinder (2), eine Niederdruckarbeitsfluidleitung (20), eine Hochdruckarbeitsfluidleitung (30) und mehrere Ventile (18, 28), die den Arbeitsfluidstrom zwischen jedem Zylinder und der Nieder- und Hochdruckarbeitsfluidleitung (20, 30) regeln, wobei mindestens ein jedem Zylinder zugeordnetes Ventil ein elektronisch gesteuertes Ventil ist, wobei die Steuerung (16) dahingehend betreibbar ist, das Öffnen und/oder Schließen der elektronisch gesteuerten Ventile für jeden Zylinder bei jedem Zyklus des Zylindervolumens (4) aktiv zu steuern, um auszuwählen, ob ein Zylinder einen aktiven Zyklus, während dessen eine Nettoverdrängung von Arbeitsfluid stattfindet, oder einen inaktiven Zyklus, während dessen keine Nettoverdrängung von Arbeitsfluid stattfindet, durchläuft,
wobei die Steuerung (16) dazu konfiguriert ist, zu bewirken, dass ausgewählte Zylinder aktive Zyklen durchlaufen und der Rest der mehreren Zylinder inaktive Zyklen durchläuft, wobei die ausgewählten Zylinder eine oder mehrere Gruppen von Zylindern bilden, so dass es zwischen Zylindern in jeder Gruppe, die aktive Zyklen durchlaufen, eine Korrelation gibt,
**dadurch gekennzeichnet, dass** die hydraulische Maschine ferner eine Datenbank (44) zum Speichern von Zylindergruppendaten (46) umfasst, die mehrere Zylindergruppen definieren, die jeweils korrelierte Zylinder enthalten, und wobei die Steuerung (16) dazu konfiguriert ist, eine oder mehrere Gruppen von Zylindern zum Durchlaufen der aktiven Zyklen aus den mehreren Zylindergruppen auszuwählen (104), die durch die gespeicherten Zylindergruppendaten (46) definiert werden, wobei die hydraulische Maschine so konfiguriert ist, dass das Verhältnis von Spitzen- zu mittlerem Durchfluss von jedem Zylinder unter 1,40 liegt.

5. Hydraulische Maschine, umfassend eine Steuerung (16), mehrere Zylinder (2), eine Niederdruckarbeitsfluidleitung (20), eine Hochdruckarbeitsfluidleitung (30) und mehrere Ventile (18, 28), die den Arbeitsfluidstrom zwischen jedem Zylinder und der Nieder- und Hochdruckarbeitsfluidleitung (20, 30) regeln, wobei mindestens ein jedem Zylinder zugeordnetes Ventil ein elektronisch gesteuertes Ventil ist, wobei die Steuerung (16) dahingehend betreibbar ist, das Öffnen und/oder Schließen der elektronisch gesteuerten Ventile für jeden Zylinder bei jedem Zyklus des Zylindervolumens (4) aktiv zu steuern, um auszuwählen, ob ein Zylinder einen aktiven Zyklus, während dessen eine Nettoverdrängung von Arbeitsfluid stattfindet, oder einen inaktiven Zyklus, während dessen keine Nettoverdrängung von Arbeitsfluid stattfindet, durchläuft,
wobei die Steuerung (16) dazu konfiguriert ist, zu bewirken, dass ausgewählte Zylinder aktive Zyklen durchlaufen und der Rest der mehreren Zylinder inaktive Zyklen durchläuft, wobei die ausgewählten Zylinder eine oder mehrere Gruppen von Zylindern bilden, so dass es zwischen Zylindern in jeder Gruppe, die aktive Zyklen durchlaufen, eine Korrelation gibt,
**dadurch gekennzeichnet, dass** die hydraulische Maschine ferner eine Datenbank (44) zum Speichern von Zylindergruppendaten (46) umfasst, die mehrere Zylindergruppen definieren, die jeweils korrelierte Zylinder enthalten, und wobei die Steuerung (16) dazu konfiguriert ist, eine oder mehrere Gruppen von Zylindern zum Durchlaufen der aktiven Zyklen aus den mehreren Zylindergruppen auszuwählen (104), die durch die gespeicherten Zylindergruppendaten (46) definiert werden, wobei die hydraulische Maschine so konfiguriert ist, dass, während der Zyklen des Zylindervolumens (4), die Änderungsrate des Arbeitsfluiddurchflusses im Wesentlichen konstant ist, wenn der Phasenwinkel von Zyklen des Zylindervolumens (4) zwischen 25 Grad und 80 Grad liegt, wobei der Phasenwinkel von 0° zu Beginn des Auslasses gemessen wird.

6. Hydraulische Maschine, umfassend eine Steuerung (16), mehrere Zylinder (2), eine Niederdruckarbeitsfluidleitung (20), eine Hochdruckarbeitsfluidleitung (30) und mehrere Ventile (18, 28), die den Arbeitsfluidstrom zwischen jedem Zylinder und der Nieder- und Hochdruckarbeitsfluidleitung (20, 30) regeln, wobei mindestens ein jedem Zylinder zugeordnetes Ventil ein elektronisch gesteuertes Ventil ist, wobei die Steuerung (16) dahingehend betreibbar ist, das Öffnen und/oder Schließen der elektronisch gesteuerten Ventile für jeden Zylinder bei jedem Zyklus des Zylindervolumens (4) aktiv zu steuern, um auszuwählen, ob ein Zylinder einen aktiven Zyklus, während dessen eine Nettoverdrängung von Arbeitsfluid stattfindet, oder einen inaktiven Zyklus, während dessen keine Nettoverdrängung von Arbeitsfluid stattfindet, durchläuft,
wobei die Steuerung (16) dazu konfiguriert ist, zu bewirken, dass ausgewählte Zylinder aktive Zyklen durchlaufen und der Rest der mehreren Zylinder inaktive Zyklen durchläuft, wobei die ausgewählten Zylinder eine oder mehrere Gruppen von Zylindern bilden, so dass es zwischen Zylindern in jeder Gruppe, die aktive Zyklen durchlaufen, eine Korrelation gibt,
**dadurch gekennzeichnet, dass** die hydraulische Maschine ferner eine Datenbank (44) zum Speichern von Zylindergruppendaten (46) umfasst, die mehrere Zylindergruppen definieren, die jeweils korrelierte Zylinder enthalten, und wobei die Steuerung (16) dazu konfiguriert ist, eine oder mehrere Gruppen von Zylindern zum Durchlaufen der aktiven Zyklen aus den mehreren Zylindergruppen auszuwählen (104), die durch die gespeicherten Zylindergruppendaten (46) definiert werden, wobei der Arbeitsfluiddurchfluss mindestens dann im Wesentlichen konstant ist, wenn der Phasenwinkel jedes Zyklus des Zylindervolumens (4) innerhalb von 20° eines Punkts in der Mitte zwischen dem oberen Totpunkt und dem unteren Totpunkt liegt.

7. Hydraulische Maschine, umfassend eine Steuerung (16), mehrere Zylinder (2), eine Niederdruckarbeitsfluidleitung (20), eine Hochdruckarbeitsfluidleitung (30) und mehrere Ventile (18, 28), die den Arbeitsfluidstrom zwischen jedem Zylinder und der Nieder- und Hochdruckarbeitsfluidleitung (20, 30) regeln, wobei mindestens ein jedem Zylinder zugeordnetes Ventil ein elektronisch gesteuertes Ventil ist, wobei die Steuerung (16) dahingehend betreibbar ist, das Öffnen und/oder Schließen der elektronisch gesteuerten Ventile für jeden Zylinder bei jedem Zyklus des Zylindervolumens (4) aktiv zu steuern, um auszuwählen, ob ein Zylinder einen aktiven Zyklus, während dessen eine Nettoverdrängung von Arbeitsfluid stattfindet, oder einen inaktiven Zyklus, während dessen keine Nettoverdrängung von Arbeitsfluid stattfindet, durchläuft,
wobei die Steuerung (16) dazu konfiguriert ist, zu bewirken, dass ausgewählte Zylinder aktive Zyklen durchlaufen und der Rest der mehreren Zylinder inaktive Zyklen durchläuft, wobei die ausgewählten Zylinder eine oder mehrere Gruppen von Zylindern bilden, so dass es zwischen Zylindern in jeder Gruppe, die aktive Zyklen durchlaufen, eine Korrelation gibt,
**dadurch gekennzeichnet, dass** die hydraulische Maschine ferner eine Datenbank (44) zum Speichern von Zylindergruppendaten (46) umfasst, die mehrere Zylindergruppen definieren, die jeweils korrelierte Zylinder enthalten, und wobei die Steuerung (16) dazu konfiguriert ist, eine oder mehrere Gruppen von Zylindern zum Durchlaufen der aktiven Zyklen aus den mehreren Zylindergruppen auszuwählen (104), die durch die gespeicherten Zylindergruppendaten (46) definiert werden, wobei die hydraulische Maschine ferner mehrere weitere Zylinder und mehrere weitere Ventile umfasst, die den Arbeitsfluidstrom zwischen jedem weiteren Zylinder und der Nieder- und Hochdruckarbeitsfluidleitung regeln, wobei mindestens ein jedem weiteren Zylinder zugeordnetes Ventil ein elektronisch gesteuertes Ventil ist, wobei die Steuerung (16) dahingehend betreibbar ist, das Öffnen und/oder Schließen der elektronisch gesteuerten weiteren Ventile für jeden weiteren Zylinder bei jedem Zyklus des Zylindervolumens aktiv zu steuern, um auszuwählen, ob ein weiterer Zylinder einen aktiven Zyklus, während dessen eine Nettoverdrängung von Arbeitsfluid stattfindet, oder einen inaktiven Zyklus, während dessen keine Nettoverdrängung von Arbeitsfluid stattfindet, durchläuft,
wobei die Steuerung (16) dazu programmiert ist, entsprechend einem Algorithmus, gemäß dem sich die Auswahl von Zylindern, die aktive Zyklen durchlaufen, in der Regel von einem Zyklus des Nockens zum nächsten ändert, auszuwählen, ob die weiteren Zylinder aktive oder inaktive Zyklen durchlaufen.

## Revendications

1. Machine hydraulique comprenant un dispositif de commande (16), une pluralité de cylindres (2), une conduite de fluide de travail basse pression (20), une conduite de fluide de travail haute pression (30), et une pluralité de soupapes (18, 28) régulant l'écoulement de fluide de travail entre chaque cylindre et les conduites de fluide de travail basse et haute pression (20, 30), au moins une soupape associée à chaque cylindre étant une soupape à commande électronique, le dispositif de commande (16) étant apte à commander activement l'ouverture et/ou la fermeture des soupapes à commande électronique pour sélectionner si un cylindre est soumis à un cycle actif au cours duquel il se produit un déplacement net de fluide de travail ou à un cycle inactif au cours duquel il ne se produit aucun déplacement net de fluide de travail, pour chaque cylindre lors de chaque cycle de volume de cylindre (4),
le dispositif de commande (16) étant configuré pour amener des cylindres sélectionnés à être soumis à des cycles actifs et le reste de ladite pluralité de cylindres à être soumis à des cycles inactifs, les cylindres sélectionnés formant un ou plusieurs groupes de cylindres, de telle sorte qu'il existe une corrélation entre des cylindres dans chaque groupe soumis à des cycles actifs,
**caractérisée en ce que** la machine hydraulique comprend en outre une base de données (44) pour mémoriser des données de groupes de cylindres (46) qui définissent une pluralité de groupes de cylindres comportant chacun des cylindres corrélés, et le dispositif de commande (16) étant configuré pour sélectionner (104) un ou plusieurs groupes de cylindres destinés à être soumis aux cycles actifs parmi la pluralité de groupes de cylindres définis par les données de groupes de cylindres mémorisées (46),
au cours d'un fonctionnement normal, la sélection de cylindres étant modifiée moins fréquemment que cela ne serait nécessaire pour faire correspondre au mieux le déplacement actuel à un signal de demande de déplacement en sélectionnant un ou plusieurs groupes de cylindres, parmi une pluralité de groupes de cylindres, avec une fréquence égale à la fréquence de cycles de volume de cylindre (4).

2. Machine hydraulique comprenant un dispositif de commande (16), une pluralité de cylindres (2), une conduite de fluide de travail basse pression (20), une conduite de fluide de travail haute pression (30), et une pluralité de soupapes (18, 28) régulant l'écoulement de fluide de travail entre chaque cylindre et les conduites de fluide de travail basse et haute pression (20, 30), au moins une soupape associée à chaque cylindre étant une soupape à commande électronique, le dispositif de commande (16) étant apte à commander activement l'ouverture et/ou la fermeture des soupapes à commande électronique pour sélectionner si un cylindre est soumis à un cycle actif au cours duquel il se produit un déplacement net de fluide de travail ou à un cycle inactif au cours duquel il ne se produit aucun déplacement net de fluide de travail, pour chaque cylindre lors de chaque cycle de volume de cylindre (4),
le dispositif de commande (16) étant configuré pour amener des cylindres sélectionnés à être soumis à des cycles actifs et le reste de ladite pluralité de cylindres à être soumis à des cycles inactifs, les cylindres sélectionnés formant un ou plusieurs groupes de cylindres, de telle sorte qu'il existe une corrélation entre des cylindres dans chaque groupe soumis à des cycles actifs,
**caractérisée en ce que** la machine hydraulique comprend en outre une base de données (44) pour mémoriser des données de groupes de cylindres (46) qui définissent une pluralité de groupes de cylindres comportant chacun des cylindres corrélés, et le dispositif de commande (16) étant configuré pour sélectionner (104) un ou plusieurs groupes de cylindres destinés à être soumis aux cycles actifs parmi la pluralité de groupes de cylindres définis par les données de groupes de cylindres mémorisées (46),
au cours du fonctionnement normal, la sélection de cylindres étant habituellement modifiée moins fréquemment que la fréquence de cycles de volume de cylindres (4).

3. Machine hydraulique comprenant un dispositif de commande (16), une pluralité de cylindres (2), une conduite de fluide de travail basse pression (20), une conduite de fluide de travail haute pression (30), et une pluralité de soupapes (18, 28) régulant l'écoulement de fluide de travail entre chaque cylindre et les conduites de fluide de travail basse et haute pression (20, 30), au moins une soupape associée à chaque cylindre étant une soupape à commande électronique, le dispositif de commande (16) étant apte à commander activement l'ouverture et/ou la fermeture des soupapes à commande électronique pour sélectionner si un cylindre est soumis à un cycle actif au cours duquel il se produit un déplacement net de fluide de travail ou à un cycle inactif au cours duquel il ne se produit aucun déplacement net de fluide de travail, pour chaque cylindre lors de chaque cycle de volume de cylindre (4),
le dispositif de commande (16) étant configuré pour amener des cylindres sélectionnés à être soumis à des cycles actifs et le reste de ladite pluralité de cylindres à être soumis à des cycles inactifs, les cylindres sélectionnés formant un ou plusieurs groupes de cylindres, de telle sorte qu'il existe une corrélation entre des cylindres dans chaque groupe soumis à des cycles actifs,
**caractérisée en ce que** la machine hydraulique comprend en outre une base de données (44) pour mémoriser des données de groupes de cylindres (46) qui définissent une pluralité de groupes de cylindres comportant chacun des cylindres corrélés, et le dispositif de commande (16) étant configuré pour sélectionner (104) un ou plusieurs groupes de cylindres destinés à être soumis aux cycles actifs parmi la pluralité de groupes de cylindres définis par les données de groupes de cylindres mémorisées (46),
le dispositif de commande (16) étant programmé pour modifier les données de regroupement de cylindres (46) de manière à modifier les cylindres qui constituent au moins l'un des groupes pendant le fonctionnement, ou de manière à modifier les circonstances dans lesquelles au moins l'un des groupes est sélectionné, dans certaines circonstances.

4. Machine hydraulique comprenant un dispositif de commande (16), une pluralité de cylindres (2), une conduite de fluide de travail basse pression (20), une conduite de fluide de travail haute pression (30), et une pluralité de soupapes (18, 28) régulant l'écoulement de fluide de travail entre chaque cylindre et les conduites de fluide de travail basse et haute pression (20, 30), au moins une soupape associée à chaque cylindre étant une soupape à commande électronique, le dispositif de commande (16) étant apte à commander activement l'ouverture et/ou la fermeture des soupapes à commande électronique pour sélectionner si un cylindre est soumis à un cycle actif au cours duquel il se produit un déplacement net de fluide de travail ou à un cycle inactif au cours duquel il ne se produit aucun déplacement net de fluide de travail, pour chaque cylindre lors de chaque cycle de volume de cylindre (4),
le dispositif de commande (16) étant configuré pour amener des cylindres sélectionnés à être soumis à des cycles actifs et le reste de ladite pluralité de cylindres à être soumis à des cycles inactifs, les cylindres sélectionnés formant un ou plusieurs groupes de cylindres, de telle sorte qu'il existe une corrélation entre des cylindres dans chaque groupe soumis à des cycles actifs,
**caractérisée en ce que** la machine hydraulique comprend en outre une base de données (44) pour mémoriser des données de groupes de cylindres (46) qui définissent une pluralité de groupes de cylindres comportant chacun des cylindres corrélés, et le dispositif de commande (16) étant configuré pour sélectionner (104) un ou plusieurs groupes de cylindres destinés à être soumis aux cycles actifs parmi la pluralité de groupes de cylindres définis par les données de groupes de cylindres mémorisées (46),
la machine hydraulique étant configurée de telle sorte que le rapport du débit de crête au débit moyen de chaque cylindre soit inférieur à 1,40.

5. Machine hydraulique comprenant un dispositif de commande (16), une pluralité de cylindres (2), une conduite de fluide de travail basse pression (20), une conduite de fluide de travail haute pression (30), et une pluralité de soupapes (18, 28) régulant l'écoulement de fluide de travail entre chaque cylindre et les conduites de fluide de travail basse et haute pression (20, 30), au moins une soupape associée à chaque cylindre étant une soupape à commande électronique, le dispositif de commande (16) étant apte à commander activement l'ouverture et/ou la fermeture des soupapes à commande électronique pour sélectionner si un cylindre est soumis à un cycle actif au cours duquel il se produit un déplacement net de fluide de travail ou à un cycle inactif au cours duquel il ne se produit aucun déplacement net de fluide de travail, pour chaque cylindre lors de chaque cycle de volume de cylindre (4),
le dispositif de commande (16) étant configuré pour amener des cylindres sélectionnés à être soumis à des cycles actifs et le reste de ladite pluralité de cylindres à être soumis à des cycles inactifs, les cylindres sélectionnés formant un ou plusieurs groupes de cylindres, de telle sorte qu'il existe une corrélation entre des cylindres dans chaque groupe soumis à des cycles actifs,
**caractérisée en ce que** la machine hydraulique comprend en outre une base de données (44) pour mémoriser des données de groupes de cylindres (46) qui définissent une pluralité de groupes de cylindres comportant chacun des cylindres corrélés, et le dispositif de commande (16) étant configuré pour sélectionner (104) un ou plusieurs groupes de cylindres destinés à être soumis aux cycles actifs parmi la pluralité de groupes de cylindres définis par les données de groupes de cylindres mémorisées (46),
la machine hydraulique étant configurée de telle sorte qu'au cours de cycles de volume de cylindre (4), le taux de changement du débit de fluide de travail soit substantiellement constant quand l'angle de phase de cycles de volume de cylindre (4) est compris entre 25° et 80°, l'angle de phase étant mesuré à partir de 0° au début de l'échappement.

6. Machine hydraulique comprenant un dispositif de commande (16), une pluralité de cylindres (2), une conduite de fluide de travail basse pression (20), une conduite de fluide de travail haute pression (30), et une pluralité de soupapes (18, 28) régulant l'écoulement de fluide de travail entre chaque cylindre et les conduites de fluide de travail basse et haute pression (20, 30), au moins une soupape associée à chaque cylindre étant une soupape à commande électronique, le dispositif de commande (16) étant apte à commander activement l'ouverture et/ou la fermeture des soupapes à commande électronique pour sélectionner si un cylindre est soumis à un cycle actif au cours duquel il se produit un déplacement net de fluide de travail ou à un cycle inactif au cours duquel il ne se produit aucun déplacement net de fluide de travail, pour chaque cylindre lors de chaque cycle de volume de cylindre (4),
le dispositif de commande (16) étant configuré pour amener des cylindres sélectionnés à être soumis à des cycles actifs et le reste de ladite pluralité de cylindres à être soumis à des cycles inactifs, les cylindres sélectionnés formant un ou plusieurs groupes de cylindres, de telle sorte qu'il existe une corrélation entre des cylindres dans chaque groupe soumis à des cycles actifs,
**caractérisée en ce que** la machine hydraulique comprend en outre une base de données (44) pour mémoriser des données de groupes de cylindres (46) qui définissent une pluralité de groupes de cylindres comportant chacun des cylindres corrélés, et le dispositif de commande (16) étant configuré pour sélectionner (104) un ou plusieurs groupes de cylindres destinés à être soumis aux cycles actifs parmi la pluralité de groupes de cylindres définis par les données de groupes de cylindres mémorisées (46),
le débit de fluide de travail étant substantiellement constant au moins lorsque l'angle de phase de chaque cycle de volume de cylindre (4) se situe à 20° au plus d'un point à mi-chemin entre le point mort haut et le point mort bas.

7. Machine hydraulique comprenant un dispositif de commande (16), une pluralité de cylindres (2), une conduite de fluide de travail basse pression (20), une conduite de fluide de travail haute pression (30), et une pluralité de soupapes (18, 28) régulant l'écoulement de fluide de travail entre chaque cylindre et les conduites de fluide de travail basse et haute pression (20, 30), au moins une soupape associée à chaque cylindre étant une soupape à commande électronique, le dispositif de commande (16) étant apte à commander activement l'ouverture et/ou la fermeture des soupapes à commande électronique pour sélectionner si un cylindre est soumis à un cycle actif au cours duquel il se produit un déplacement net de fluide de travail ou à un cycle inactif au cours duquel il ne se produit aucun déplacement net de fluide de travail, pour chaque cylindre lors de chaque cycle de volume de cylindre (4),
le dispositif de commande (16) étant configuré pour amener des cylindres sélectionnés à être soumis à des cycles actifs et le reste de ladite pluralité de cylindres à être soumis à des cycles inactifs, les cylindres sélectionnés formant un ou plusieurs groupes de cylindres, de telle sorte qu'il existe une corrélation entre des cylindres dans chaque groupe soumis à des cycles actifs,
**caractérisée en ce que** la machine hydraulique comprend en outre une base de données (44) pour mémoriser des données de groupes de cylindres (46) qui définissent une pluralité de groupes de cylindres comportant chacun des cylindres corrélés, et le dispositif de commande (16) étant configuré pour sélectionner (104) un ou plusieurs groupes de cylindres destinés à être soumis aux cycles actifs parmi la pluralité de groupes de cylindres définis par les données de groupes de cylindres mémorisées (46),
la machine hydraulique comprenant en outre une pluralité de cylindres supplémentaires et une pluralité de soupapes supplémentaires régulant l'écoulement de fluide de travail entre chaque cylindre supplémentaire et les conduites de fluide de travail basse et haute pression, au moins une soupape supplémentaire associée à chaque cylindre supplémentaire étant une soupape à commande électronique, le dispositif de commande (16) étant apte à commander activement l'ouverture et/ou la fermeture des soupapes supplémentaires à commande électronique pour sélectionner si un cylindre supplémentaire est soumis à un cycle actif au cours duquel il se produit un déplacement net de fluide de travail ou à un cycle inactif au cours duquel il ne se produit aucun déplacement net de fluide de travail, pour chaque cylindre supplémentaire lors de chaque cycle de volume de cylindre,
le dispositif de commande (16) étant programmé pour sélectionner si les cylindres supplémentaires sont soumis à des cycles actifs ou inactifs en fonction d'un algorithme conformément auquel la sélection de cylindres qui sont soumis à des cycles actifs varie habituellement d'un cycle de came à l'autre.
